(19) Europäisches Patentamt
European Patent Office
Office européen des brevets

(11) Veröffentlichungsnummer: **0 035 638**
**A2**

(12) **EUROPÄISCHE PATENTANMELDUNG**

(21) Anmeldenummer: 81100636.0

(22) Anmeldetag: 29.01.81

(51) Int. Cl.³: C 07 C 131/00
A 01 N 37/18, C 07 C 103/34

(30) Priorität: 09.02.80 DE 3004871

(43) Veröffentlichungstag der Anmeldung:
16.09.81 Patentblatt 81/37

(84) Benannte Vertragsstaaten:
BE CH DE FR GB IT LI NL

(71) Anmelder: BAYER AG
Zentralbereich Patente, Marken und Lizenzen
D-5090 Leverkusen 1, Bayerwerk(DE)

(72) Erfinder: Stetter, Jörg, Dr.
Gellertweg 4
D-5600 Wuppertal 1(DE)

(72) Erfinder: Reiser, Wolf, Dr.
Kiebitzweg 17
D-5600 Wuppertal 1(DE)

(72) Erfinder: Faust, Wilfried, Dr.
Eifgenstrasse 16
D-5068 Odenthal 3(DE)

(54) **Halogenalkylamide, Verfahren zu deren Herstellung und deren Verwendung als Gegenmittel zum Schutz von Kulturpflanzen vor Schädigungen durch Herbizide.**

(57) Neue Halogenalkylamide der Formel

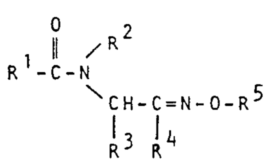

(I)

in welcher

$R^1$ für Halogenalkyl steht,

$R^2$ für Alkyl, Alkenyl, Alkinyl, Alkoxyalkyl, Alkylthioalkyl, Aralkyl, Halogenalkyl oder Alkoximinoalkyl steht,

$R^3$ für Wasserstoff oder Alkyl mit 1 bis 4 Kohlenstoffatomen steht,

$R_4$ für Wasserstoff oder Alkyl mit 1 bis 4 Kohlenstoffatomen steht und

$R^5$ für Wasserstoff, Alkyl, Alkenyl, Alkinyl oder Aralkyl steht,

mehrere Verfahren zu deren Herstellung sowie deren Verwendung als Gegenmittel zum Schutz von Kulturpflanzen vor Schädigungen durch herbizid wirksame Thiolcarbamate und Acetanilide.

Neue Halogenacylamine der Formel

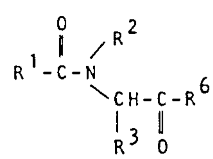

(IV)

in welcher

$R^1$, $R^2$ und $R^3$ die oben angegebene Bedeutung haben und

$R^6$ für Wasserstoff oder Methyl steht,

sowie mehrere Verfahren zur Herstellung dieser Halogenacyl=amine.

Neue Amin-Derivate der Formel

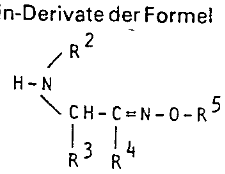

(III)

in welcher

$R^2$, $R^3$, $R^4$ und $R^5$ die oben angegebene Bedeutung haben,

sowie ein Verfahren zu deren Herstellung.

EP 0 035 638 A2

Croydon Printing Company Ltd.

BAYER AKTIENGESELLSCHAFT
Zentralbereich
Patente Marken und Lizenzen

5090 Leverkusen-Bayerwerk

Dü/ABc

Ib

Halogenalkylamide, Verfahren zu deren Herstellung und deren Verwendung als Gegenmittel zum Schutz von Kulturpflanzen vor Schädigungen durch Herbizide

Die vorliegende Erfindung betrifft neue Halogenalkylamide, mehrere Verfahren zu deren Herstellung sowie deren Verwendung als Gegenmittel zum Schutz von Kulturpflanzen vor Schädigungen durch herbizid wirksame Thiolcarbamate und Acetanilide. Ferner betrifft die vorliegende Erfindung neue Wirkstoffkombinationen die aus neuen Halogenalkylamiden und bestimmten herbizid wirksamen Thiolcarbamaten bzw. Acetaniliden bestehen und besonders gute selektive herbizide Eigenschaften besitzen.

Unter "Gegenmitteln" ("Safener", "Antidote") sind im vorliegenden Zusammenhang Stoffe zu verstehen, welche befähigt sind, schädigende Wirkungen von Herbiziden auf Kulturpflanzen spezifisch zu antagonisieren, d.h. die Kulturpflanzen zu schützen, ohne dabei die Herbizidwirkung auf die zu bekämpfenden Unkräuter merklich zu beeinflussen.

Es ist bekannt, daß bestimmte Thiolcarbamate und



BAD ORIGINAL

Acetanilide beim Einsatz zur Unkrautbekämpfung in Mais und anderen Kulturen mehr oder weniger starke Schäden an den Kulturpflanzen hervorrufen. Weiterhin ist bekannt, daß Verbindungen wie z.B. N,N-Di-n-propyl-dichloracetamid geeignet sind, um Schädigungen durch Thiolcarbamate oder Acetanilide an Kulturpflanzen zu vermindern (vgl. DE-OS 22 18 097). Die Wirksamkeit dieses Stoffes als Gegenmittel ist jedoch nicht immer ganz befriedigend.

Es wurden jetzt neue Halogenalkylamide der Formel

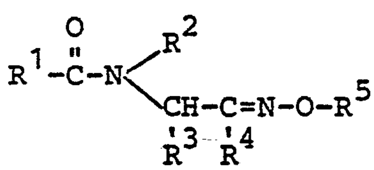

(I)

in welcher

$R^1$ für Halogenalkyl steht,

$R^2$ für Alkyl, Alkenyl, Alkinyl, Alkoxyalkyl, Alkylthioalkyl, Aralkyl, Halogenalkyl oder Alkoximinoalkyl steht,

$R^3$ für Wasserstoff oder Alkyl mit 1 bis 4 Kohlenstoffatomen steht,

$R^4$ für Wasserstoff oder Alkyl mit 1 bis 4 Kohlenstoffatomen steht und

$R^5$ für Wasserstoff, Alkyl, Alkenyl, Alkinyl oder Aralkyl steht,

gefunden.

Weiterhin wurde gefunden, daß sich Halogenalkylamide der Formel (I) dadurch herstellen lassen, daß man

a) Säurechloride bzw. Säureanhydride der Formel

$$R^1-\overset{O}{\overset{\|}{C}}-X \qquad (II)$$

in welcher

$R^1$ die oben angegebene Bedeutung hat und

X für Chlor oder den Rest $R^1$-CO-O- steht, worin

$R^1$ wiederum die oben angegebene Bedeutung hat,

mit Amin-Derivaten der Formel

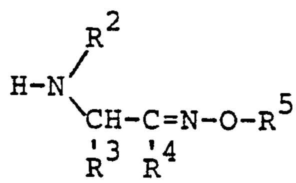

(III)

in welcher

$R^2$, $R^3$, $R^4$ und $R^5$ die oben angegebene Bedeutung haben,

gegebenenfalls in Gegenwart eines Säurebindemittels sowie gegebenenfalls in Gegenwart eines inerten Verdünnungsmittels umsetzt,

oder

b) Halogenacylamine der Formel

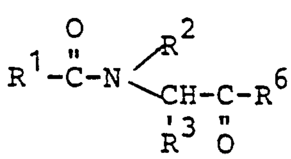

(IV)

in welcher
$R^1$, $R^2$ und $R^3$ die oben angegebene Bedeutung haben, und
$R^6$ für Wasserstoff oder Methyl steht,

mit Hydroxylamin-Derivaten der Formel

$$H_2N-O-R^5 \quad x \quad HCl \qquad (V)$$

in welcher
$R^5$ die oben angegebene Bedeutung hat,

in Gegenwart eines Säurebindemittels sowie in Gegenwart eines Verdünnungsmittels umsetzt.

Ferner wurde gefunden, daß Halogenalkylamide der Formel (I) sich hervorragend verwenden lassen, um Kulturpflanzen vor Schädigungen durch herbizid wirksame Thiolcarbamate bzw. durch herbizid wirksame Acetanilide zu schützen.

Außerdem wurde gefunden, daß die neuen Wirkstoffkombinationen, bestehend aus einem Halogenalkylamid der Formel (I) und mindestens einem herbizid wirksamen Thiolcarbamat bzw. mindestens einem herbizid wirksamen Acetanilid hervorragend geeignet sind zur selektiven Unkrautbekämpfung in Nutzpflanzenkulturen.

Überraschenderweise werden Herbizidschädigungen durch Thiolcarbamate bzw. durch Acetanilide an Kulturpflanzen bei Mitverwendung von Halogenalkylamiden der Formel (I) besser unterdrückt als beim Einsatz der bekannten Verbindung N,N-Di-n-propyldichloracetamid, welches ein

chemisch ähnlicher Stoff gleicher Wirkungsart ist. Im übrigen war nicht zu erwarten, daß die erfindungsgemäßen Wirkstoffkombinationen bessere selektive herbizide Eigenschaften besitzen als Wirkstoffkombinationen, welche aus mindestens einem herbizid wirksamen Thiolcarbamat bzw. mindestens einem herbizid wirksamen Acetanilid und dem als Gegenmittel bekannten N,N-Di-n-propyl-dichloracetamid bestehen.

Die erfindungsgemäßen Halogenalkylamide sind durch die Formel (I) allgemein definiert. In dieser Formel steht $R^1$ vorzugsweise für geradkettiges oder verzweigtes Halogenalkyl mit 1 bis 4 Kohlenstoffatomen und 1 bis 3 Halogenatomen, insbesondere Chlor- und/oder Bromatomen. $R^2$ steht vorzugsweise für geradkettiges oder verzweigtes Alkyl mit 1 bis 6 Kohlenstoffatomen, Alkenyl mit bis zu 6 Kohlenstoffatomen, Alkinyl mit bis zu 6 Kohlenstoffatomen, Alkoxyalkyl mit 1 bis 4 Kohlenstoffatomen in der Alkylgruppe und 1 bis 4 Kohlenstoffatomen im Alkoxyteil, Alkylthioalkyl mit 1 bis 4 Kohlenstoffatomen im Alkylteil und 1 bis 4 Kohlenstoffatomen im Alkylthioteil, Aralkyl mit 6 bis 10 Kohlenstoffatomen im Arylteil und 1 bis 4 Kohlenstoffatomen im Alkylteil, Halogenalkyl mit 1 bis 6 Kohlenstoffatomen und 1 bis 5 Halogenatomen sowie für Alkoximinoalkyl mit 1 bis 4 Kohlenstoffatomen in der Alkoxygruppe und 1 oder 2 Kohlenstoffatomen in der Alkylgruppe. $R^3$ steht vorzugsweise für Wasserstoff, Methyl oder Ethyl. $R^4$ steht ebenfalls vorzugsweise für Wasserstoff, Methyl oder Ethyl, $R^5$ steht vorzugsweise für Wasserstoff, geradkettiges oder verzweigtes Alkyl mit 1 bis 6 Kohlenstoffatomen, Alkenyl mit bis zu 6 Kohlenstoffatomen, Alkinyl mit bis zu 6 Kohlenstoffatomen oder für

Aralkyl mit 6 bis 10 Kohlenstoffatomen im Arylteil und 1 bis 4 Kohlenstoffatomen im Alkylteil.

Besonders bevorzugt sind diejenigen Verbindungen der Formel (I), in denen $R^1$ für Halogenalkyl mit 1 bis 3 Kohlenstoffatomen und 1 bis 3 Chlor- oder Bromatomen steht; $R^2$ für Alkyl mit 1 bis 4 Kohlenstoffatomen, Alkenyl mit bis zu 4 Kohlenstoffatomen, Alkinyl mit bis zu 4 Kohlenstoffatomen, Alkoxyalkyl mit 1 bis 3 Kohlenstoffatomen in der Alkoxygruppe und 1 bis 4 Kohlenstoffatomen im Alkylteil, Alkylthioalkyl mit 1 bis 3 Kohlenstoffatomen im Alkylthioteil und 1 bis 3 Kohlenstoffatomen im Alkylteil, Aralkyl mit 6 bis 10 Kohlenstoffatomen im Arylteil und 1 oder 2 Kohlenstoffatomen im Alkylteil, Halogenalkyl mit 1 bis 4 Kohlenstoffatomen und 1 bis 3 Fluor-, Chlor- und/oder Bromatomen, oder für Alkoximinoalkyl mit 1 bis 3 Kohlenstoffatomen in der Alkoxygruppe und 1 oder 2 Kohlenstoffatome in der Alkylgruppe steht; $R^3$ für Wasserstoff, Methyl oder Ethyl steht; $R^4$ für Wasserstoff, Methyl oder Ethyl steht und $R^5$ für Wasserstoff, Alkyl mit 1 bis 4 Kohlenstoffatomen, Alkenyl mit bis zu 4 Kohlenstoffatomen, Alkinyl mit bis zu 4 Kohlenstoffatomen oder für Aralkyl mit 6 bis 10 Kohlenstoffatomen im Arylteil und 1 oder 2 Kohlenstoffatomen im Alkylteil steht.

Verwendet man Dichloressigsäurechlorid und Allyl-2-methoximinoethyl-amin als Ausgangsstoffe, so läßt sich der Verlauf des erfindungsgemäßen Verfahrens (a) durch das folgende Formelschema wiedergeben:

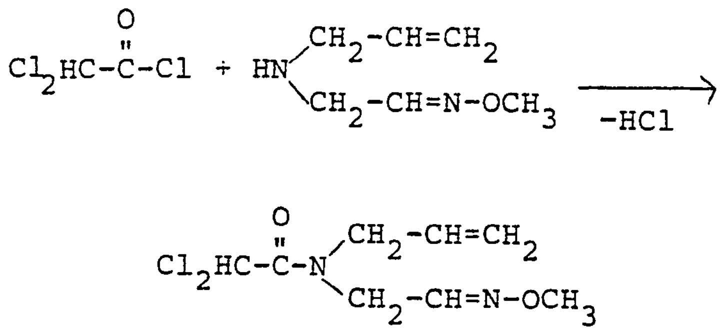


Verwendet man N-2-Oxopropyl-N-allyl-dichloressigsäureamid und O-Methyl-hydroxylamin-hydrochlorid als Ausgangsstoffe, so läßt sich der Verlauf des erfindungsgemäßen Verfahrens (b) durch das folgende Formelschema wiedergeben:

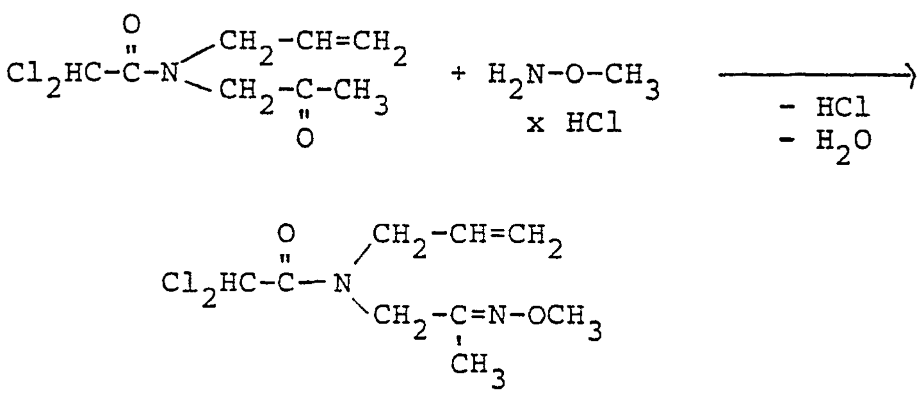


Die bei dem erfindungsgemäßen Verfahren (a) als Ausgangsstoffe benötigten Säurechloride bzw. Säureanhydride sind durch die Formel (II) allgemein definiert. In dieser Formel steht $R^1$ vorzugsweise für diejenigen Reste, die bereits im Zusammenhang mit der Beschreibung der erfindungsgemäßen Halogenalkylamide der Formel (I) vorzugsweise für $R^1$ genannt wurden. X steht vorzugsweise für Chlor oder für den Rest $R^1$-CO-O, worin $R^1$ wiederum vorzugsweise für diejenigen Reste steht, die oben bereits

vorzugsweise für $R^1$ erwähnt wurden.

Die Säurechloride bzw. Säureanhydride der Formel (II) sind bekannt oder lassen sich nach bekannten Methoden herstellen.

Die bei dem erfindungsgemäßen Verfahren (a) weiterhin als Ausgangsstoffe benötigten Amin-Derivate sind durch die Formel (III) allgemein definiert. In dieser Formel stehen $R^2$, $R^3$, $R^4$ und $R^5$ vorzugsweise für diejenigen Reste, die bereits im Zusammenhang mit der Beschreibung der erfindungsgemäßen Halogenalkylamide der Formel (I) vorzugsweise für diese Reste genannt wurden.

Die Amin-Derivate der Formel

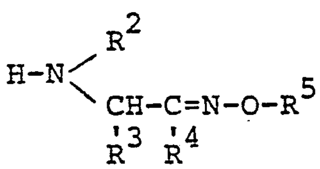

(III)

in welcher

$R^2$ für Alkyl, Alkenyl, Alkinyl, Alkoxyalkyl, Alkylthioalkyl, Aralkyl, Halogenalkyl oder Alkoximinoalkyl steht,

$R^3$ für Wasserstoff oder Alkyl mit 1 bis 4 Kohlenstoffatomen steht,

$R^4$ für Wasserstoff oder Alkyl mit 1 bis 4 Kohlenstoffatomen steht und

$R^5$ für Wasserstoff, Alkyl, Alkenyl, Alkinyl oder Aralkyl steht,

sind neu.

Die Amin-Derivate der Formel (III) lassen sich herstellen, indem man Amine der Formel

$$H_2N-R^2 \qquad (VI)$$

in welcher
$R^2$ die oben angegebene Bedeutung hat,

mit Verbindungen der Formel

$$\underset{\substack{| \\ R^3}}{Y-CH}-\underset{\substack{| \\ R^4}}{C}=N-O-R^5 \qquad (VII)$$

in welcher
$R^3$, $R^4$ und $R^5$ die oben angegebene Bedeutung haben und
Y für Halogen, Tosyl oder Mesyl steht,

gegebenenfalls in Gegenwart eines Säurebindemittels sowie gegebenenfalls in Gegenwart eines inerten Verdünnungsmittels umsetzt.

Die bei der Herstellung der Amin-Derivate der Formel (III) nach dem obigen Verfahren als Ausgangsstoffe benötigten Amine sind durch die Formel (VI) allgemein definiert. In dieser Formel steht $R^2$ vorzugsweise für diejenigen Reste, die bereits im Zusammenhang mit der Beschreibung der erfindungsgemäßen Halogenalkylamide der Formel (I) vorzugsweise für $R^2$ genannt wurden.

Die Amine der Formel (VI) sind bekannt oder lassen sich nach bekannten Verfahren herstellen.

Die bei der Herstellung der Amin-Derivate der Formel (III) nach dem obigen Verfahren weiterhin als Ausgangsstoffe benötigten Verbindungen der Formel (VII) sind teilweise bekannt. Die bisher noch nicht beschriebenen Stoffe der Formel (VII) lassen sich jedoch in einfacher Weise herstellen.

So erhält man

α) Verbindungen der Formel (VII), indem man Carbonylverbindungen der Formel

Y-CH-C=O (VIII)
$R^3$ $R^4$

in welcher
$R^3$, $R^4$ und Y die oben angegebene Bedeutung haben,

mit Hydroxylamin-Derivaten der Formel

$$H_2N-O-R^5 \quad x \quad HCl \qquad (V)$$

in welcher
$R^5$ die oben angegebene Bedeutung hat,

in Gegenwart eines Säurebindemittels, wie zum Beispiel Natriumcarbonat, Kaliumcarbonat oder Natriumhydrogencarbonat, sowie in Gegenwart eines Verdünnungsmittels, wie zum Beispiel Ethanol oder Wasser bei Temperaturen zwischen -20°C und 100°C umsetzt,

bzw.

ß) diejenigen Verbindungen der Formel (VII), in denen Y für Brom steht, indem man Verbindungen der Formel

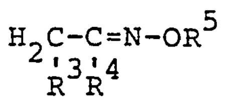 (IX)

in welcher
$R^3$, $R^4$ und $R^5$ die oben angegebene Bedeutung haben,

mit N-Bromsuccinimid der Formel

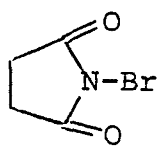 (X)

in Gegenwart eines Verdünnungsmittels, wie zum Beispiel Tetrachlorkohlenstoff, bei Temperaturen zwischen 20°C und 80°C umsetzt.

Die bei der Herstellung der Verbindungen der Formel (VII) nach den Verfahrensvarianten (α) und (ß) als Ausgangsprodukte benötigten Stoffe der Formeln (V), (VIII), (IX) und (X) sind bekannt oder lassen sich nach im Prinzip bekannten Verfahren in einfacher Weise herstellen.

Als Säurebindemittel kommen bei der Herstellung der Amin-Derivate der Formel (III) nach dem oben angegebenen Verfahren alle üblichen Säureakzeptoren in Betracht. Hierzu gehören vorzugsweise Alkalihydroxide, wie Natriumhydroxid und Kaliumhydroxid, ferner Alkalicarbonate, wie Natriumcarbonat, Kaliumcarbonat und Natriumhydrogencarbonat,

und weiterhin niedere tertiäre Amine, wie Triethylamin, Dimethylbenzylamin, Pyridin, Diazabicyclooctan und 1,8-Diaza-bicyclo/5,4,0/undec-7-en. Es kann jedoch auch im Überschuß eingesetztes Amin der Formel (VI) gleichzeitig als Säurebindemittel fungieren. In diesem Fall erübrigt sich die Zugabe eines zusätzlichen Säurebindemittels.

Das Verfahren zur Herstellung der Amin-Derivate der Formel (III) wird vorzugsweise in Gegenwart eines Verdünnungsmittels durchgeführt. Als Verdünnungsmittel können hierbei Wasser oder organische Lösungsmittel wie Ether, Toluol, Alkohole, Methanol oder Ethanol, oder auch das eingesetzte Amin der Formel (VI) selbst verwendet werden.

Die Reaktionstemperaturen können bei der Herstellung der Amin-Derivate der Formel (III) nach dem oben beschriebenen Verfahren innerhalb eines größeren Bereiches variiert werden. Im allgemeinen arbeitet man bei Temperaturen zwischen -20°C und +100°C, vorzugsweise zwischen 20°C und 80°C.

Bei der Durchführung des Verfahrens zur Herstellung der Amin-Derivate der Formel (III) setzt man auf 1 Mol

einer Verbindung der Formel (VII) vorzugsweise 1 bis 3 Mol an Amin der Formel (VI) sowie gegebenenfalls 1 Mol an Säurebindemittel ein. Die Isolierung der Reaktionsprodukte erfolgt nach üblichen Methoden.

Im allgemeinen verfährt man in der Weise, daß man das Reaktionsgemisch nach beendeter Umsetzung filtriert und das Filtrat gegebenenfalls nach vorherigem Einengen destilliert oder, falls ein Feststoff verbleibt, umkristallisiert.

Bei dem erfindungsgemäßen Verfahren (a) kommen als Säurebindemittel alle üblichen Säureakzeptoren in Betracht. Hierzu gehören vorzugsweise diejenigen Säureakzeptoren, die bereits im Zusammenhang mit der Beschreibung des Verfahrens zur Herstellung der Amin-Derivate der Formel (III) vorzugsweise als Säurebindemittel genannt wurden. Es kann jedoch auch im Überschuß eingesetztes Amin der Formel (III) gleichzeitig als Säurebindemittel fungieren.

Das erfindungsgemäße Verfahren (a) wird vorzugsweise in Gegenwart eines Verdünnungsmittels durchgeführt. Als Verdünnungsmittel können hierbei alle inerten organischen Solventien verwendet werden. Hierzu gehören vorzugsweise diejenigen Lösungsmittel, die bereits im Zusammenhang mit der Beschreibung des Verfahrens zur Herstellung der Amin-Derivate der Formel (III) vorzugsweise als Verdünnungsmittel genannt wurden.

Die Reaktionstemperaturen können bei dem erfindungsgemäßen Verfahren (a) innerhalb eines größeren Bereiches variiert werden. Im allgemeinen arbeitet man bei Temperaturen

zwischen -20°C und +100°C, vorzugsweise zwischen 0°C und 80°C.

Bei der Durchführung des erfindungsgemäßen Verfahrens (a) setzt man auf 1 Mol Amin-Derivat der Formel (III) vorzugsweise 1 bis 2 Mol Säurechlorid bzw. Säureanhydrid der Formel (VI) sowie gegebenenfalls 1 bis 2 Mol an Säurebindemittel ein. Die Isolierung der Reaktionsprodukte erfolgt nach üblichen Methoden. Im allgemeinen verfährt man in der Weise, daß man das Reaktionsgemisch nach beendeter Umsetzung einengt, den verbleibenden Rückstand mit Wasser und einem organischen Lösungsmittel versetzt, die organische Phase dann abtrennt und nach dem Trocknen einengt und destilliert oder umkristallisiert.

Die bei dem erfindungsgemäßen Verfahren (b) als Ausgangsstoffe benötigten Halogenacylamine sind durch die Formel (IV) allgemein definiert. In dieser Formel stehen $R^1$, $R^2$ und $R^3$ vorzugsweise für diejenigen Reste, die bereits im Zusammenhang mit der Beschreibung der erfindungsgemäßen Verbindungen der Formel (I) vorzugsweise für diese Reste genannt wurden. $R^6$ steht für Wasserstoff oder Methyl.

Die Halogenacylamine der Formel

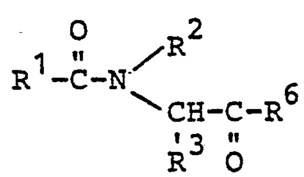

(IV)

in welcher

$R^1$ für Halogenalkyl steht,

$R^2$ für Alkyl, Alkenyl, Alkinyl, Alkoxyalkyl, Alkylthioalkyl, Aralkyl, Halogenalkyl oder Alkoximinoalkyl steht,

$R^3$ für Wasserstoff oder Alkyl mit 1 bis 4 Kohlenstoffatomen steht und

$R^6$ für Wasserstoff oder Methyl steht,

sind neu.

Die Halogenacylamine der Formel (IV) lassen sich jedoch in einfacher Weise herstellen. So erhält man

c) diejenigen Halogenacylamine der Formel (IV), in denen $R^6$ für Methyl steht, indem man Verbindungen der Formel

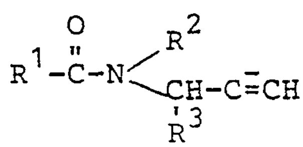

(XI)

in welcher

$R^1$, $R^2$ und $R^3$ die oben angegebene Bedeutung haben,

in saurem Medium in Gegenwart eines Katalysators mit Wasser behandelt,

bzw.

d) diejenigen Halogenacylamine der Formel (IV), in denen $R^6$ für Wasserstoff steht, indem man Acetale der Formel

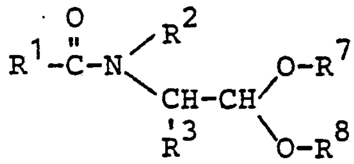 (XII)

in welcher

$R^1$, $R^2$ und $R^3$ die oben angegebene Bedeutung haben,

$R^7$ für Alkyl steht,

$R^8$ für Alkyl steht und ferner

$R^7$ und $R^8$ gemeinsam für eine Ethylengruppe stehen,

in Gegenwart eines sauren Katalysators sowie in Gegenwart eines Verdünnungsmittels spaltet.

Die bei dem Verfahren (c) als Ausgangsstoffe benötigten Verbindungen sind durch die Formel (XI) allgemein definiert. In dieser Formel stehen $R^1$, $R^2$ und $R^3$ vorzugsweise für diejenigen Reste, die bereits im Zusammenhang mit der Beschreibung der erfindungsgemäßen Stoffe der Formel (I) vorzugsweise für diese Reste genannt wurden.

Die Verbindungen der Formel (XI) sind teilweise bekannt. Die noch nicht beschriebenen lassen sich jedoch in einfacher Weise nach im Prinzip bekannten Verfahren synthetisieren. So erhält man die betreffenden Verbindungen, indem man Säurechloride bzw. Säureanhydride der Formel

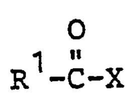 (II)

in welcher

$R^1$ und X die oben angegebene Bedeutung haben,

mit Alkinylaminen der Formel

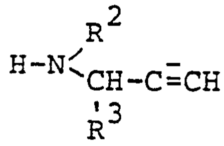 , (XVIII)

in welcher
$R^2$ und $R^3$ die oben angegebene Bedeutung haben,

gegebenenfalls in Gegenwart eines Säurebindemittels, wie zum Beispiel Triethylamin, sowie gegebenenfalls in Gegenwart eines inerten Verdünnungsmittels, wie zum Beispiel Toluol, bei Temperaturen zwischen -20°C und 100°C umsetzt.

Die Alkinylamine der Formel (XVIII) sind bekannt oder lassen sich nach prinzipiell bekannten Verfahren herstellen.

Als Katalysatoren kommen bei dem Verfahren (c) alle für derartige Additionen von Wasser an Dreifachbindungen geeigneten Stoffe in Betracht. Vorzugsweise in Frage kommt Quecksilbersulfat.

Bei der Umsetzung nach dem Verfahren (c) arbeitet man in saurem Medium. Vorzugsweise kommen als Reaktionsmedien wasserhaltige Säuren, wie zum Beispiel 85 %ige Ameisensäure oder halbkonzentrierte Schwefelsäure in Frage.

Die Reaktionstemperaturen können bei dem Verfahren (c) innerhalb eines größeren Bereiches variiert werden. Im allgemeinen arbeitet man bei Temperaturen zwischen 0°C und 100°C, vorzugsweise zwischen 20°C und 80°C.

Bei der Durchführung des Verfahrens (c) wird 1 Mol einer Verbindung der Formel (XI) in Gegenwart einer katalytischen Menge Quecksilbersulfat oder eines entsprechenden Katalysators mit einem Überschuß an wäßriger Säure behandelt. Die Aufarbeitung erfolgt nach üblichen Methoden. Im allgemeinen verfährt man in der Weise, daß man das Reaktionsgemisch abstumpft, mit einem im Wasser wenig löslichen organischen Solvens extrahiert, die organische Phase neutralisiert, wäscht und nach dem Trocknen einengt und den verbleibenden Rückstand destilliert.

Die bei dem Verfahren (d) als Ausgangsstoffe benötigten Acetale sind durch die Formel (XII) allgemein definiert. In dieser Formel stehen $R^1$, $R^2$ und $R^3$ vorzugsweise für diejenigen Reste, die bereits im Zusammenhang mit der Beschreibung der erfindungsgemäßen Halogenalkylamide der Formel (I) vorzugsweise für diese Reste genannt wurden. Die Reste $R^7$ und $R^8$ stehen jeweils vorzugsweise für Alkyl mit 1 oder 2 Kohlenstoffatomen. Ferner können $R^7$ und $R^8$ auch gemeinsam für eine Ethylengruppe stehen.

Die Verbindungen der Formel (XII) sind bekannt oder lassen sich nach im Prinzip bekannten Verfahren herstellen.

Als Katalysatoren kommen bei dem Verfahren (d) starke organische und anorganische Säuren in Betracht. Hierzu gehören vorzugsweise Schwefelsäure, p-Toluolsulfonsäure.

Es können aber auch stark saure, $-SO_3H$-Gruppen enthaltende Ionenaustauscher verwendet werden.

Als Verdünnungsmittel kommen bei dem Verfahren (d) Wasser sowie organische Solventien in Frage. Hierzu gehören vorzugsweise Toluol und Dioxan.

Die Reaktionstemperaturen können bei dem Verfahren (d) innerhalb eines größeren Bereiches variiert werden. Im allgemeinen arbeitet man bei Temperaturen zwischen 20°C und 100°C, vorzugsweise zwischen 60°C und 100°C.

Bei der Durchführung des Verfahrens (d) behandelt man ein Acetal der Formel (XII) in Gegenwart eines Verdünnungsmittels mit einer katalytischen Menge an Säure. Die Aufarbeitung erfolgt nach üblichen Methoden.

Die bei dem erfindungsgemäßen Verfahren (b) weiterhin als Ausgangsstoffe benötigten Hydroxylamin-Derivate sind durch die Formel (V) allgemein definiert. In dieser Formel steht $R^5$ vorzugsweise für diejenigen Reste, die bereits im Zusammenhang mit der Beschreibung der erfindungsgemäßen Halogenalkylamide vorzugsweise für $R^5$ genannt wurden.

Als Säurebindemittel kommen bei dem erfindungsgemäßen Verfahren (b) alle üblichen Säureakzeptoren in Betracht. Hierzu gehören vorzugsweise Alkaliacetate, wie Natriumacetat und Kaliumacetat, Alkalihydroxide, wie Natriumhydroxid und Kaliumhydroxid, ferner Alkalicarbonate, wie Natriumcarbonat, Kaliumcarbonat und Natriumhydrogencarbonat, und weiterhin niedere tertiäre Amine, wie Triethylamin, Dimethylbenzylamin, Pyridin, Diazabicyclooctan und 1,8-Diaza-bicyclo/5,4,0/undec-7-en.

Als Verdünnungsmittel kommen bei dem erfindungsgemäßen Verfahren (b) Wasser sowie polare organische Lösungsmittel in Betracht. Hierzu gehören vorzugsweise Alkohole, wie Methanol und Ethanol, ferner Ether, wie Dioxan und Tetrahydrofuran, weiterhin Nitrile, wie Propionitril und Acetonitril, und außerdem Formamide, wie Dimethylformamid.

Die Reaktionstemperaturen können bei dem erfindungsgemäßen Verfahren (b) innerhalb eines größeren Temperaturbereiches variiert werden. Im allgemeinen arbeitet man bei Temperaturen zwischen 0°C und 120°C, vorzugsweise zwischen 20°C und 80°C.

Bei der Durchführung des erfindungsgemäßen Verfahrens (b) setzt man auf 1 Mol Halogenacylamin der Formel (IV) 1 bis 1,5 Mol an Hydroxylamin-Derivat der Formel (V) sowie 1 bis 2 Mol an Säurebindemittel ein. Die Isolierung der Reaktionsprodukte erfolgt nach üblichen Methoden. Im allgemeinen verfährt man in der Weise, daß man nach beendeter Umsetzung das Reaktionsgemisch einengt, den Rückstand mit Wasser und einem organischen, in Wasser wenig löslichen Solvens versetzt, die organische Phase abtrennt, trocknet und einengt und den verbleibenden Rückstand destilliert oder umkristallisiert.

Die erfindungsgemäßen Halogenalkylamide der Formel (I) eignen sich - wie bereits erwähnt -, zum Schutz von Kulturpflanzen vor Schädigungen durch herbizid wirksame Thiolcarbamate und Acetanilide, ohne deren Unkrautwirkung merklich zu beeinflussen.

Vorzugsweise können die Halogenalkylamide der Formel (I) als Gegenmittel zum Schutz von Kulturpflanzen vor Schädigungen durch herbizid wirksame Thiolcarbamate der Formel

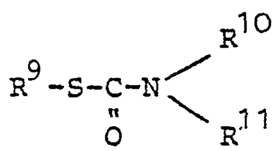

(XIII)

in welcher

$R^9$ für niederes Alkyl, Benzyl, Chlorbenzyl oder Alkoxybenzyl steht,

$R^{10}$ und $R^{11}$ unabhängig voneinander für Alkyl mit 2 bis 4 Kohlenstoffatomen oder für Cyclohexyl stehen und außerdem

$R^{10}$ und $R^{11}$ gemeinsam mit dem angrenzenden Stickstoffatom für einen fünf- bis siebengliedrigen heterocyclischen Ring stehen,

bzw. zum Schutz von Kulturpflanzen vor Schädigungen durch herbizid wirksame Acetanilide

- der Formel

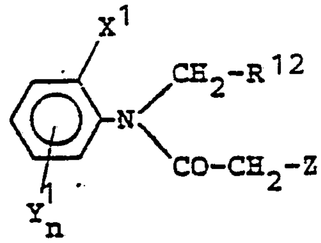

(XIV)

in welcher

$R^{12}$ für einen gegebenenfalls substituierten N-haltigen heterocyclichen Rest steht,

$X^1$ und $Y^1$ gleich oder verschieden sind und für Alkyl stehen,

Z für Halogen steht und

n für 0, 1 oder 2 steht,

sowie deren herbizid-wirksame Säureadditionssalze und Metallsalz-Komplexe,

- bzw. der Formel

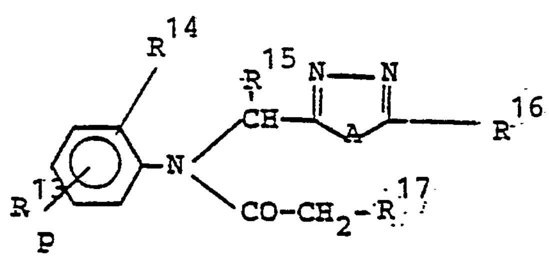

(XV)

in welcher

A für Sauerstoff, Schwefel oder die Gruppierung $NR^{18}$ steht,

$R^{15}$ für Wasserstoff oder Alkyl steht,

$R^{16}$ für Wasserstoff, Alkyl, Halogenalkyl, Alkenyl, Alkinyl, Cycloalkyl, Halogen, gegebenenfalls substituiertes Aryl oder gegebenenfalls substituiertes Aralkyl oder die Gruppierungen $-OR^{19}$ $-SR^{19}$ und $NR^{18}R^{19}$ steht,

$R^{18}$ für Wasserstoff, Alkyl oder gegebenenfalls substituiertes Aryl steht,

$R^{19}$ für Wasserstoff, Alkyl, Halogenalkyl, Alkenyl, Alkinyl, Cycloalkyl oder gegebenenfalls substituiertes Aralkyl steht,

$R^{13}$ für Alkyl steht,

$R^{14}$ für Alkyl oder Halogen steht,

$R^{17}$ für Halogen steht und

p für die Zahlen 0, 1 oder 2 steht,

- bzw. der Formel

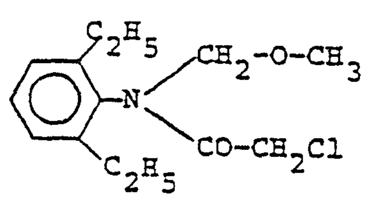

(XVI)

- oder der Formel

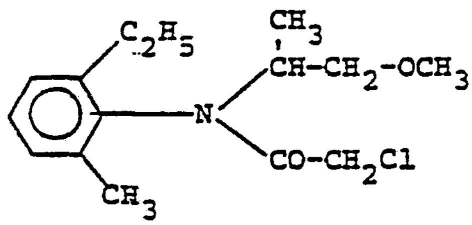

(XVII)

verwendet werden.

Weiterhin können die Halogenalkylamide der Formel (I) vorzugsweise als Gegenmittel zum Schutz von Kulturpflanzen vor Schädigungen durch herbizid wirksame substituierte α-Halogenacetanilide, die aus der DE-OS 29 18 297 bekannt sind, verwendet werden.

Als Beispiele für Thiolcarbamate der Formel (XIII) seien im einzelnen genannt:

S-Ethyl-N,N-dipropylthiocarbamat
S-Ethyl-N,N-diisobutylthiocarbamat
S-Propyl-N-butyl-N-ethylthiocarbamat
S-Propyl-N,N-diisopropylthiocarbamat
S-Ethyl-N,N-diethylthiocarbamat
S-Ethyl-N-ethyl-N-cyclohexylthiocarbamat
S-Ethyl-hexahydro-azepin-1-thiocarbamat
S-p-Methoxybenzyl-N,N-diethylthiocarbamat
S-p-Chlorbenzyl-N,N-diethylthiocarbamat
S-Benzyl-N,N-diethylthiocarbamat
S-Benzyl-N,N-di-sek.-butylthiocarbamat
S-Propyl-N-ethyl-N-butylthiocarbamat

Die Thiolcarbamate der Formel (XIII) und deren herbizide Wirksamkeit sind bereits bekannt (vgl. US-Patentschriften 2 913 327, 3 037 853, 3 185 720, 3 198 786 und 3 582 314).

In der Formel (XIV) steht $R^{12}$ vorzugsweise für die gegebenenfalls substituierten Azolylreste Pyrazol-1-yl, Imidazol-1-yl, 1,2,4-Triazol-1-yl; 1,2,3-Triazol-1-yl; 1,3,4-Triazol-1-yl und 1,2,3,4-Tetrazol-1-yl sowie für gegebenenfalls substituiertes Pyrrol-1-yl. Als Substituenten kommen vorzugsweise in Frage: Halogen, insbesondere Fluor, Chlor und Brom, sowie Alkyl mit 1 bis 4 Kohlenstoffatomen. $X^1$ und $Y^1$ sind gleich oder verschieden und stehen vorzugsweise für geradkettiges oder verzweigtes Alkyl mit 1 bis 4 Kohlenstoffatomen. Z steht vorzugsweise für die Halogene Chlor und Brom und der Index n steht für 0, 1 oder 2.

Als Beispiele für Acetanilide der Formel (XIV) seien im einzelnen genannt:

2-Methyl-6-ethyl-N-(pyrazol-1-yl-methyl)-chloracetanilid
2,6-Diethyl-N-(pyrazol-1-yl-methyl)-chloracetanilid
2,6-Diethyl-N-(1,2,4-triazol-1-yl-methyl)-chloracetanilid
2,6-Dimethyl-N-(1,2,4-triazol-1-yl-methyl)-chloracetanilid
2-Methyl-N-(pyrazol-1-yl-methyl)-chloracetanilid
2,5-Dimethyl-N-(pyrazol-1-yl-methyl)-chloracetanilid
2,3-Dimethyl-N-(pyrazol-1-yl-methyl)-chloracetanilid
2-Methyl-6-ethyl-N-(pyrazol-1-yl-methyl)-chloracetanilid-hydrochlorid

2,6-Diethyl-N-(pyrazol-1-yl-methyl)-chloracetanilid-hydrochlorid

2,6-Diethyl-N[(3,5-dimethyl-pyrazol-1-yl)-methyl]-chloracetanilid

2,6-Diethyl-N-[(3-chlor-1,2,4-triazolyl)-methyl]-chloracetanilid

2-Methyl-6-ethyl-N-[(3,5-dimethyl-pyrazol-1-yl)-methyl]-chloracetanilid

2-tert.-Butyl-N-(pyrazol-1-yl-methyl)-chloracetanilid

2-Methyl-6-ethyl-N-[(3-brom-5-methyl-pyrazolyl)-methyl]-chloracetanilid

2-Methyl-6-ethyl-N-[(3-chlor-1,2,4-triazolyl)-methyl]-chloracetanilid

2,6-Diethyl-N-[(4-Chlor-pyrazol-1-yl)-methyl]-chloracetanilid

Weitere bevorzugt in Frage kommende Acetanilide der Formel (XIV) sind in der nachfolgenden Tabelle 1 formelmäßig aufgeführt.

Tabelle 1

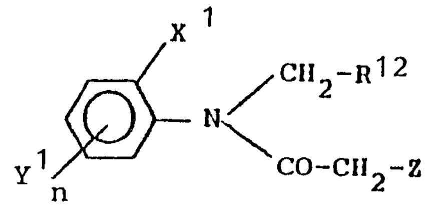

(XIV)

| Bsp.-Nr. | $X^1$ | $Y^1_n$ | Z | $R^{12}$ |
|---|---|---|---|---|
| XIV-1 | $C_2H_5$ | $6-C_2H_5$ | Cl | Pyrazol-1-yl |
| " -2 | $C_2H_5$ | $6-C_2H_5$ | Cl | 1,2, 4-Triazol-1-yl |
| " -3 | $i-C_3H_7$ | $6-i-C_3H_7$ | Cl | Pyrazol-1-yl |
| " -4 | $CH_3$ | $6-C_2H_5$ | Cl | 1,2,4-Triazol-1-yl |
| " -5 | $CH_3$ | $6-C_2H_5$ | Cl | Pyrazol-1-yl |
| " -6 | $C_2H_5$ | $4,6-(CH_3)_2$ | Cl | Pyrazol-1-yl |
| " -7 | $CH_3$ | $4,6-(CH_3)_2$ | Cl | Pyrazol-1-yl |
| " -8 | $C_2H_5$ | $4-CH_3$, | Cl | Pyrazol-1-yl |
| " | | $6-C_2H_5$ | | |
| " -9 | $i-C_3H_7$ | $6-i-C_3H_7$ | Cl | 1,3,4-Triazol-1-yl |
| " -10 | $i-C_3H_7$ | $6-i-C_3H_7$ | Cl | 1,2, 4-Triazol-1-yl |
| " -11 | $C_2H_5$ | $6-C_2H_5$ | Cl | Pyrrol-1-yl |
| " -12 | $i-C_3H_7$ | - | Cl | 1,2,4-Triazol-1-yl |
| " -13 | $CH_3$ | $6-C_2H_5$ | Cl | 1,2,3,4-Tetrazol-1-yl |
| " -14 | $i-C_3H_7$ | - | Cl | Pyrazol-1-yl |
| " -15 | $C_2H_5$ | - | Cl | 1,2,4-Triazol-1-yl |

Tabelle 1 (Fortsetzung)

| Beispiel Nr. | $X^1$ | $Y^1_n$ | Z | $R^{12}$ |
|---|---|---|---|---|
| XIV-16 | $CH_3$ | $6-CH_3$ | Cl | Pyrazol-1-yl |
| " -17 | $CH_3$ | $6-CH_3$ | Cl | 1,2,4-Triazol-1-yl |
| " -18 | $CH_3$ | $5-CH_3$ | Cl | 1,2,4-Triazol-1-yl |
| " -19 | $CH_3$ | - | Cl | Pyrazol-1-yl |
| " -20 | $CH_3$ | - | Cl | 1,2,4-Triazol-1-yl |
| " -21 | $CH_3$ | $5-CH_3$ | Cl | Pyrazol-1-yl |
| " -22 | $CH_3$ | $3-CH_3$ | Cl | 1,2,4-Triazol-1-yl |
| " -23 | $CH_3$ | $3-CH_3$ | Cl | Pyrazol-1-yl |
| " -24 | $C_2H_5$ | $6-CH_3$ | Cl | Pyrazol-1-yl (xHCl) |
| " -25 | $C_2H_5$ | $6-C_2H_5$ | Cl | Pyrazol-1-yl (xHCl) |
| " -26 | $C_2H_5$ | $6-C_2H_5$ | Cl | 3,5-Dimethyl-pyrazol-1-yl |
| " -27 | $C_2H_5$ | $6-C_2H_5$ | Cl | Brom-methyl-pyrazolyl |
| " -28 | $C_2H_5$ | $6-C_2H_5$ | Cl | 3-Chlor-1,2,4-triazol-1-yl |

Tabelle 1 (Fortsetzung)

| Beispiel Nr. | $X^1$ | $Y^1_n$ | Z | $R^{12}$ |
|---|---|---|---|---|
| XIV-29 | $CH_3$ | 6-$C_2H_5$ | Cl | 3,5-Dimethyl-pyrazol-1-yl |
| " -30 | $C_2H_5$ | 6-$C_2H_5$ | Cl | 3-Methyl-pyrazol-1-yl |
| " -31 | $C_2H_5$ | 6-$CH_3$ | Cl | 3-Methyl-pyrazol-1-yl |
| " -32 | $C(CH_3)_3$ | - | Cl | Pyrazol-1-yl |
| " -33 | $C(CH_3)_3$ | - | Cl | 1,2,4-Triazol-1-yl |
| " -34 | $C_2H_5$ | 6-$CH_3$ | Cl | Brom-methyl-pyrazolyl |
| " -35 | $CH_3$ | 6-$C_2H_5$ | Cl | 4-Chlor-pyrazol-1-yl |
| " -36 | $CH_3$ | 6-$C_2H_5$ | Cl | 3-Chlor-1,2,4-triazol-1-yl |
| " -37 | $C_2H_5$ | 6-$CH_3$ | Cl | 2,4,5-Trichlor-imidazol-1-yl |
| " -38 | $C_2H_5$ | 6-$C_2H_5$ | Cl | 4-Chlor-pyrazol-1-yl |
| " -39 | $C_2H_5$ | 6-$C_2H_5$ | Cl | 1,2,3,4-Tetrazol-1-yl |

Tabelle 1 (Fortsetzung)

| Beispiel Nr. | $X^1$ | $Y^1_n$ | Z | $R^{12}$ |
|---|---|---|---|---|
| XIV -40 | $C_2H_5$ | $6-C_2H_5$ | Br | Pyrazol-1-yl |
| " -41 | $CH_3$ | $6-C_2H_5$ | Br | Pyrazol-1-yl |
| " -42 | $C_2H_5$ | $6-C_2H_5$ | Cl | Imidazol-1-yl |
| " -43 | $C_2H_5$ | $6-C_2H_5$ | Br | 1,2,4-Triazol-1-yl |
| " -44 | $CH_3$ | $6-C_2H_5$ | Br | 1,2,4-Triazol-1-yl |

Die Acetanilide der Formel (XIV) und deren herbizide Wirksamkeit sowie deren herbizid wirksame Säureadditionssalze und Metallsalz-Komplexe sind bereits bekannt (vgl. DE-OS 2 648 .088 und DE-OS 2 704 281).

In der Formel (XV) steht A vorzugsweise für Sauerstoff, Schwefel oder die Gruppierung $-NR^{18}-$, worin $R^{18}$ vorzugsweise für Wasserstoff, geradkettiges oder verzweigtes Alkyl mit 1 bis 4 Kohlenstoffatomen sowie für Aryl mit 6 bis 10 Kohlenstoffatomen, insbesondere Phenyl, steht, wobei jeder dieser Arylreste substituiert sein kann durch Halogen, Alkyl mit 1 bis 4 Kohlenstoffatomen, Alkoxy mit 1 oder 2 Kohlenstoffatomen, Alkylthio mit 1 oder 2 Kohlenstoffatomen, Cyano, Nitro und/oder Halogenalkyl mit bis zu 2 Kohlenstoff- und bis zu 5 gleichen oder verschiedenen Halogenatomen, wobei als Halogene insbesondere Fluor oder Chlor genannt seien. $R^{15}$ steht vorzugsweise für Wasserstoff oder Methyl. $R^{16}$ steht in der Formel (XV) vorzugsweise für Wasserstoff, geradkettiges oder verzweigtes Alkyl mit 1 bis 4 Kohlenstoffatomen, Halogenalkyl mit bis zu 3 Kohlenstoffatomen und bis zu 5 gleichen oder verschiedenen Halogenatomen, wobei als Halogene insbesondere Fluor oder Chlor stehen, beispielhaft sei Trifluormethyl genannt, ferner vorzugsweise für Alkenyl und Alkinyl mit 2 bis 4 Kohlenstoffatomen, Cycloalkyl mit 5 bis 7 Kohlenstoffatomen sowie für Halogen, insbesondere Fluor, Chlor oder Brom. $R^{16}$ steht ferner vorzugsweise für Aryl mit 6 bis 10 Kohlenstoffatomen, insbesondere Phenyl, wobei jeder dieser Arylreste substituiert

sein kann durch Halogen, Alkyl mit 1 bis 4 Kohlenstoffatomen, Alkoxy mit 1 oder 2 Kohlenstoffatomen, Alkylthio mit 1 oder 2 Kohlenstoffatomen, Cyano, Nitro und/oder Halogenalkyl mit bis zu 2 Kohlenstoffatomen und bis zu 5 gleichen oder verschiedenen Halogenatomen, wobei als Halogene insbesondere Fluor oder Chlor stehen und Trifluormethyl als Beispiel für Halogenalkyl speziell genannt sei. $R^{16}$ steht ferner vorzugsweise für Aralkyl mit 6 bis 10 Kohlenstoffatomen im Arylteil und 1 bis 4 Kohlenstoffatomen im Alkylteil, insbesondere für Benzyl, wobei jeder dieser Aralkylreste im Arylteil substituiert sein kann durch Halogen, Alkyl mit 1 bis 4 Kohlenstoffatomen, Alkoxy mit 1 oder 2 Kohlenstoffatomen, Alkylthio mit 1 oder 2 Kohlenstoffatomen, Cyano, Nitro und/oder Halogenalkyl mit bis zu 2 Kohlenstoffatomen und bis zu 5 gleichen oder verschiedenen Halogenatomen, wobei als Halogene insbesondere Fluor oder Chlor stehen und Trifluormethyl als Beispiel für Halogenalkyl speziell genannt sei. Außerdem steht $R^{16}$ für die Gruppierungen $-OR^{19}$, $-SR^{19}$ und $-NR^{18}R^{19}$, worin $R^{18}$ für diejenigen Reste steht, die oben bereits vorzugsweise für diesen Rest genannt wurden, $R^{19}$ steht in diesen Gruppierungen für Wasserstoff, geradkettiges oder verzweigtes Alkyl mit 1 bis 4 Kohlenstoffatomen, Halogenalkyl mit 1 bis 3 Kohlenstoffatomen und bis zu 5 gleichen oder verschiedenen Halogenatomen, wobei als Halogene insbesondere Fluor oder Chlor stehen, beispielhaft sei Trifluormethyl genannt, ferner vorzugsweise für Alkenyl und Alkinyl mit 2 bis 4 Kohlenstoffatomen, Cycloalkyl mit 5 bis 7 Kohlenstoffatomen sowie für Aralkyl mit 6 bis 10 Kohlenstoffatomen im Arylteil und 1 bis 4 Kohlenstoffatomen im Alkylteil, insbesondere für Benzyl, wobei jeder dieser Aralkylreste im Arylteil substituiert sein kann durch Halogen, Alkyl mit 1 bis 4 Kohlenstoffatomen, Alkoxy mit 1 oder 2 Kohlenstoffatomen, Alkylthio mit 1 oder 2 Kohlenstoffatomen, Cyano, Nitro und/oder Halogenalkyl mit bis zu 2 Kohlenstoffatomen und bis zu 5 gleichen oder verschiedenen Halogenatomen, wobei als Halogene insbesondere Fluor oder Chlor stehen und Trifluormethyl als Beispiel für Halogenalkyl speziell genannt sei. In der Formel (XV) steht $R^{13}$ vorzugsweise für geradkettiges oder verzweigtes Alkyl mit 1 bis 4 Kohlenstoffatomen. $R^{14}$ steht in der Formel (XV) vorzugsweise für geradkettiges oder verzweigtes Alkyl mit 1 bis 4 Kohlenstoffatomen oder für die Halogene Fluor, Chlor und Brom. $R^{17}$ steht in der Formel (XV) vorzugsweise für Chlor Brom und Jod. Der Index p steht für die Zahlen O, 1 oder 2.

Als Beispiele für Acetanilide der Formel (XV) seien im einzelnen genannt:

2,6-Diethyl-N-[(2-methyl-1,3,4-oxadiazol-5-yl)-methyl]-chloracetanilid

2,6-Dimethyl-N-[(2-methyl-1,3,4-oxadiazol-5-yl)-methyl]-chloracetanilid

2-Ethyl-6-methyl-N-[(2-methyl-1,3,4-oxadiazol-5-yl)-methyl]-chloracetanilid

2-tert.-Butyl-N-[(2-methyl-1,3,4-oxadiazol-5-yl)-methyl]-chloracetanilid

Weitere bevorzugt in Frage kommende Acetanilide der Formel (XV) sind in der nachfolgenden Tabelle 2 formelmäßig aufgeführt.

Tabelle 2

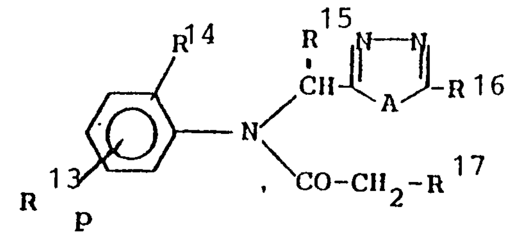

(XV)

| Bsp. Nr. | $R^{15}$ | $R^{16}$ | $R^{14}$ | $R^{13}_p$ | A | $R^{17}$ |
|---|---|---|---|---|---|---|
| XV-1 | H | $CH_3$ | $CH_3$ | $6-C_2H_5$ | O | Cl |
| " -2 | H | $SCH_3$ | $C_2H_5$ | $6-C_2H_5$ | $N-CH_3$ | Cl |
| " -3 | H | $CH_3$ | $C_2H_5$ | $6-C_2H_5$ | O | Cl |
| " -4 | H | $CH_3$ | $CH_3$ | $6-CH_3$ | O | Cl |
| " -5 | H | $CH_3$ | $C(CH_3)_3$ | - | O | Cl |
| " -6 | H | $-S-CH_2-CH=CH_2$ | $C_2H_5$ | $6-C_2H_5$ | 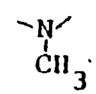 | Cl |
| " -7 | H | 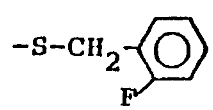 | $CH_3$ | $6-C_3H_5$ | 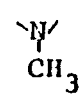 | Cl |
| " -8 | H | $C_2H_5$ | $CH_3$ | $6-C_2H_5$ | O | Cl |
| " -9 | H | $C_2H_5$ | $C_2H_5$ | $6-C_2H_5$ | O | Cl |
| " -10 | H | $i-C_3H_7$ | $CH_3$ | $6-C_2H_5$ | O | Cl |
| " -11 | H | $CH_3$ | $CH_3$ | $3-CH_3$ | 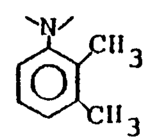 | Cl |

Tabelle 2 (Fortsetzung)

| Bsp. Nr. | $R^{15}$ | $R^{16}$ | $R^{14}$ | $R^{13}_p$ | A | $R^{17}$ |
|---|---|---|---|---|---|---|
| XV-12 | H | $CH_3$ | $C_2H_5$ | 6-$C_2H_5$ | O | Br |
| " -13 | H | $CH_3$ | $CH_3$ | 6-$C_2H_5$ | O | Br |
| " -14 | H | $CH_3$ | i-$C_3H_7$ | 6-i-$C_3H_7$ | O | Cl |

Die Acetanilide der Formel (XV) und deren herbizide Wirksamkeit sind bereits bekannt (vgl. DE-OS 2 805 757).

Weitere bevorzugt in Frage kommende Acetanilide, bei denen die erfindungsgemäßen Verbindungen der Formel (I) als Gegenmittel eingesetzt werden können, sind die Verbindungen der Formeln (XVI) und (XVII). Diese Stoffe und deren herbizide Wirksamkeit sind bereits bekannt (vgl. US-PS 3 442 945, DE-OS 2 328 340).

Die erfindungsgemäßen Halogenalkylamide der Formel (I) eignen sich insbesondere zum Schutz von wichtigen Kulturpflanzen, wie Mais, Sojabohnen, Baumwolle, Zuckerrüben, Getreide, Reis und Zuckerrohr vor Herbizidschädigungen durch Thiolcarbamate und Acetanilide.

Die erfindungsgemäßen Wirkstoffkombinationen bestehend aus einem Halogenalkylamid der Formel (I) und mindestens einem herbizid wirksamen Thiolcarbamat bzw. mindestens einem herbizid wirksamen Acetanilid zeigen eine sehr gute Wirkung gegen Unkräuter und Ungräser in zahlreichen Nutzpflanzenkulturen. Sie können daher zur selektiven Unkrautbekämpfung in zahlreichen Nutzpflanzenkulturen verwendet werden. - Unter Unkräutern im weitestens Sinne sind hierbei alle Pflanzen zu verstehen, die an Orten wachsen, wo sie unerwünscht sind.

Die erfindungsgemäßen Wirkstoffkombinationen können z.B. bei folgenden Pflanzen verwendet werden.

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dicotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca; Cucumis, Cuburbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Insbesondere eignen sich die erfindungsgemäßen Wirkstoffkombinationen zur selektiven Unkrautbekämpfung in Mais, Sojabohnen, Baumwolle, Zuckerrüben, Getreide, Reis und Zuckerrohr.

Die erfindungsgemäßen Gegenmittel können gegebenenfalls im Gemisch mit den herbiziden Wirkstoffen,

bei denen sie eingesetzt werden, in die üblichen Formulierungen übergeführt werden, wie Lösungen, Emulsionen, Spritzpulver, Suspensionen, Pulver, Stäubemittel, Schäume, lösliche Pulver, Granulate, Suspensions-Emulsionskonzentrate, wirkstoffimprägnierte Natur- und synthetische Stoffe, Feinstverkapselungen in polymeren Stoffen und in Hüllmassen für Saatgut.

Diese Formulierungen werden in bekannter Weise hergestellt, z.B. durch Vermischen der erfindungsgemäßen Gegenmittel gegebenenfalls im Gemisch mit den herbiziden Wirkstoffen, bei denen sie eingesetzt werden, mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid sowie Wasser; als feste Trägerstoffe: natürliche Gesteinsmehle, wie Kaoline, Tonderden, Talkum, Kreide, Quarz, Attapulgit, Montmorillonit oder Diatomeenerde und synthetische Gesteinsmehle,

wie hochdisperse Kieselsäure, Aluminiumoxid und Silikate; als feste Trägerstoffe für Granulate: gebrochene und fraktionierte natürliche Gesteine wie Calcit, Marmor, Bims, Sepiolith, Dolomit sowie synthetische Granulate aus anorganischen Mehlen sowie Granulate aus organischem Material wie Sägemehle, Kokosnußschalen, Maiskolben und Tabakstengel; als Emulgier- und/oder schaumerzeugende Mittel: nichtionogene und anionische Emulgatoren, wie Polyoxyethylen-Fettsäure-Ester, Polyoxyethylen-Fettalkohol-Ether, z.B. Alkylaryl-polyglykol-ether, Alkylsulfonate, Alkylsulfate, Arylsulfonate sowie Eiweißhydrolysate; als Dispergiermittel: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat,

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gew.-% an Gegenmittel bzw. an Gegenmittel und herbizidem Wirkstoff, vorzugsweise zwischen 0,5 und 90 %.

Die erfindungsgemäßen Gegenmittel können als solche oder in ihren Formulierungen auch in Mischung mit herbiziden Wirkstoffen eingesetzt werden, wobei Fertigformulierungen oder Tankmischung möglich ist. Auch eine Mischung mit anderen bekannten Wirkstoffen wie Fungiziden, Insektiziden, Akariziden, Nematiziden, Schutzstoffen gegen Vogelfraß, Wuchstoffen, Pflanzennährstoffen und Bodenstrukturverbesserungsmitteln ist möglich.

Die erfindungsgemäßen Gegenmittel bzw. Gemische aus erfindungsgemäßen Gegenmitteln und herbizidem Wirkstoff können als solche, in Form ihrer Formulierungen oder den daraus durch weiteres Verdünnen bereiteten Anwendungsformen, wie gebrauchsfertige Lösungen, Suspensionen, Emulsionen, Pulver und Granulate angewandt werden. Die Anwendung geschieht in üblicher Weise, z.B. durch Gießen, Spritzen, Sprühen, Stäuben oder Streuen, Trockenbeizen, Feuchtbeizen, Naßbeizen, Schlämmbeizen oder Inkrustieren.

Die erfindungsgemäßen Gegenmittel können nach den für derartige Antidote üblichen Methoden ausgebracht werden. So können die erfindungsgemäßen Gegenmittel

entweder vor oder nach dem Herbizid ausgebracht oder zusammen mit dem Herbizid appliziert werden. Ferner können Kulturpflanzen durch Saatgutbehandlung mit den Gegenmitteln vor der Saat (Beizung) vor Schäden geschützt werden, wenn das Herbizid vor oder nach der Saat angewendet wird. Eine weitere Einsatzmöglichkeit besteht darin, daß man die Gegenmittel bei der Aussaat in die Saatfurche ausbringt. Wenn es sich bei den Pflanzen um Stecklinge handelt, so können diese vor der Auspflanzung mit den Gegenmitteln behandelt werden.

Beim Einsatz der erfindungsgemäßen Gegenmittel kommen die ortsüblichen Aufwandmengen an den jeweiligen Herbiziden zur Anwendung. Die Aufwandmengen an herbizidem Wirkstoff schwanken zwischen 0,5 und 5 kg/ha. Die Aufwandmenge an Gegenmittel ist unabhängig vom Herbizid und der Aufwandmenge des herbiziden Wirkstoffes. Im allgemeinen liegen die Aufwandmengen an erfindungsgemäßen Gegenmitteln bei Flächenbehandlung zwischen 0,1 und 5 kg/ha, vorzugsweise zwischen 0,2 und 4 kg/ha. Bei der Saatgutbehandlung liegen die Aufwandmengen an erfindungsgemäßen Gegenmitteln im allgemeinen zwischen 10 und 300 g pro Kilogramm Saatgut, vorzugsweise zwischen 25 und 200 g pro Kilogramm Saatgut.

In den erfindungsgemäßen Wirkstoffkombinationen

können die Gewichtsverhältnisse von Gegenmitteln zu herbiziden Wirkstoffen in relativ großen Bereichen schwanken. Im allgemeinen entfallen auf 1 Gew.-Teil an herbizidem Wirkstoff 0,04 bis 1,0 Gew.-Teile, vorzugsweise 0,1 bis 0,5 Gew.-Teile an Gegenmittel der Formel (I).

Die Herstellung und die Verwendung der erfindungsgemäßen Halogenalkylamide der Formel (I) geht aus den nachfolgenden Beispielen hervor.

Herstellungsbeispiele

Beispiel 1

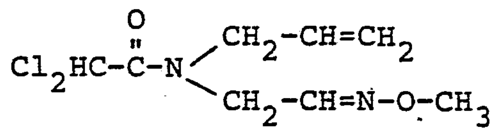

Zu einer Lösung von 75 g (0,58 Mol) Allyl-2-methox-imino-ethylamin und 60,6 g (0,6 Mol) Triethylamin in 500 ml Tetrahydrofuran werden bei 5 bis 10°C unter Rühren 88,4 g (0,6 Mol) Dichloressigsäurechlorid getropft. Es wird noch eine Stunde bei 20°C nachgerührt. Danach arbeitet man auf, indem man das Lösungsmittel abzieht, den Rückstand in Wasser und Methylenchlorid aufnimmt, die organische Phase abtrennt, über Natriumsulfat trocknet und einengt. Der Rückstand wird unter vermindertem Druck destilliert. Man erhält auf diese Weise 133,5 g (95 % der Theorie) an N-Allyl-N-(2-methox-imino-ethyl)-dichloracetamid.
Kp = 150°C/0,1 Torr (Kugelrohr)

Herstellung des Ausgangsproduktes

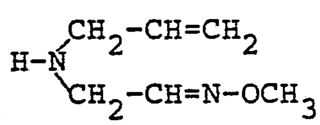

(III-1)

Zu einer Mischung aus 239 g (4,2 Mol) Allylamin und 192 g (1,4 Mol) gepulvertem Kaliumcarbonat werden bei 50°C unter Rühren 150 g (1,4 Mol) Chloracetaldehyd-O-methyl-oximether getropft. Nach Beendigung der exothermen Reaktion wird noch 2 Stunden bei 50°C gerührt. Danach wird der Niederschlag abfiltriert und das Filtrat einer fraktionierten Vakuumdestillation unterworfen. Man erhält auf diese Weise 132,9 g (74 % der Theorie) an Allyl-2-methoximino-ethyl-amin.
Kp = 62-64°C/12 Torr

Bei 107°C/12 mm Hg gehen noch 10,3 g eines Produktes über, bei dem es sich nach Ausweis durch die spektroskopischen Daten um das Bisalkylierungsprodukt der Formel

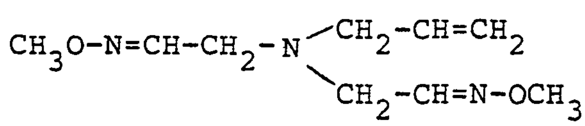

handelt.

Beispiel 2

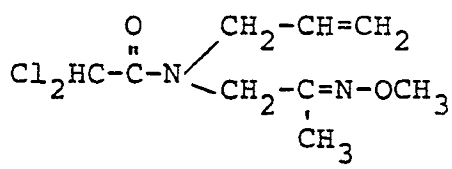

3,5 g (0,015 Mol) N-2-Oxo-propyl-N-allyl-dichloressigsäureamid werden zu einer siedenden Mischung aus 1,7 g wasserfreiem Natriumacetat und 1,7 g (0,02 Mol) O-Methylhydroxylamin-hydrochlorid in 100 ml Ethanol gegeben. Es wird eine Stunde unter Rückfluß gekocht. Danach arbeitet man auf, indem man unter vermindertem Druck einengt, den verbleibenden Rückstand in Wasser und Methylenchlorid aufnimmt, die organische Phase abtrennt über Natriumsulfat trocknet und

anschließend einengt. Man erhält auf diese Weise 3,7 g (97 % der Theorie) an N-(2-Methoximino-propyl)-N-allyl-dichloressigsäureamid.
$n_D^{20}$ = 1,5008

Herstellung des Ausgangsproduktes

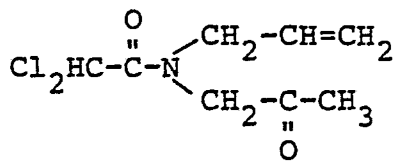

(IV-1)

In eine auf 80°C erhitzte Mischung aus 80 ml 85 %iger Ameisensäure und 1 g Quecksilbersulfat werden 10 g (0,049 Mol) Dichloressigsäure-N-allyl-N-propargylamid unter Rühren eingetropft. Es wird 12 Stunden nachgerührt, abgekühlt und nach Zugabe von 50 ml gesättigter wäßriger Ammoniumsulfat-Lösung dreimal mit Methylenchlorid extrahiert. Nach Neutralisation der organischen Phase mit wäßriger Sodalösung wird noch zweimal mit je 50 ml Wasser gewaschen und über Natriumsulfat getrocknet. Nach dem Abdestillieren des Lösungsmittels wird der Rückstand unter vermindertem Druck destilliert. Man erhält auf diese Weise 5,5 g (50 % der Theorie) an N-2-Oxo-propyl-N-allyl-dichloressigsäureamid.

Kp = 135°C /0,2 Torr (Kugelrohr)
$n_D^{20}$ = 1,5033

Herstellung des Vorproduktes

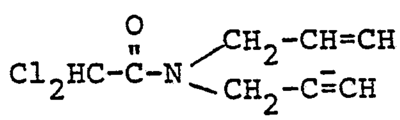

13 g (0,13 Mol) Allyl-propargylamin und 14,2 g (0,14 Mol) Triethylamin werden in 150 ml Tetrahydrofuran gelöst und bei 5-10°C unter Rühren tropfenweise mit 20,6 g (0,14 Mol) Dichloressigsäurechlorid versetzt. Es wird noch 2 Stunden bei 20°C nachgerührt. Danach wird das Lösungsmittel abgezogen und der Rückstand mit Wasser und Methylenchlorid versetzt. Man trennt die organische Phase ab, trocknet sie über Natriumsulfat, zieht das Lösungsmittel ab und destilliert den Rückstand unter vermindertem Druck. Man erhält auf diese Weise 17 g (63 % der Theorie) an Dichloressigsäure-N-allyl-N-propargylamid.

Kp = 85-87°C / 0,2 Torr

$n_D^{20}$ = 1,5139

Nach den in den Beispielen 1 und 2 angegebenen Methoden werden auch die in der nachstehenden Tabelle 3 formelmäßig aufgeführten Halogenalkylamide der Formel (I) hergestellt.

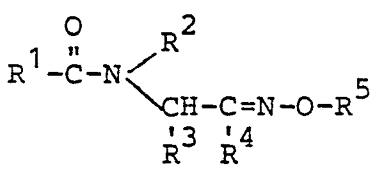

(I)

Tabelle 3

| Beispiel-Nr. | $R^1$ | $R^2$ | $R^3$ | $R^4$ | $R^5$ | Brechungsindex $[n_D^{20}]$ |
|---|---|---|---|---|---|---|
| 3 | $Cl_2HC-$ | $CH_3$ | H | $CH_3$ | $CH_3$ | 1,5003 |
| 4 | $ClHC-$<br>$CH_3$ | $-CH_2-CH=CH_2$ | H | $CH_3$ | $CH_3$ | 1,4868 |
| 5 | $Cl_2HC-$ | $-CH_2-CH=CH_2$ | $CH_3$ | H | $CH_3$ | 1,5022 |
| 6 | $Cl_2HC-$ | $-CH_2-CH=CH_2$ | H | H | $C_2H_5$ | |
| 7 | $Cl_2HC-$ | $-CH_2-CH=CH_2$ | H | $CH_3$ | $C_2H_5$ | |
| 8 | $ClHC-$<br>$CH_3$ | $-CH_2-CH=CH_2$ | H | H | $CH_3$ | 1,4873 |

Tabelle 3 (Fortsetzung)

| Beispiel-Nr. | $R^1$ | $R^2$ | $R^3$ | $R^4$ | $R^5$ | Brechungsindex $[n_D^{20}]$ |
|---|---|---|---|---|---|---|
| 9 | $Cl_2CH-$ | $-CH_2-\overset{CH_3}{C}=N-OCH_3$ | H | $CH_3$ | $CH_3$ | 1,4870 |
| 10 | $Cl_2CH-$ | $-CH_2-CH=CH_2$ | $CH_3$ | $CH_3$ | $CH_3$ | |

Die in der folgenden Tabelle 4 formelmäßig aufgeführten Substanzen werden in analoger Weise hergestellt wie das im Beispiel 2 beschriebene Ausgangsprodukt (IV-1):

Tabelle 4

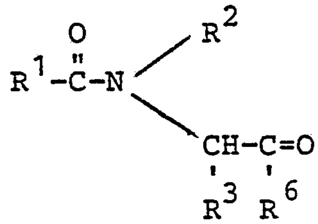

(IV)

| Beispiel-Nr. | $R^1$ | $R^2$ | $R^3$ | $R^6$ | $n_D^{20}$ bzw. Fp |
|---|---|---|---|---|---|
| IV-2 | $Cl_2CH-$ | $-CH_2-CH=CH_2$ | H | $CH_3$ | 1,5033 |
| IV-3 | $CH_3-\underset{Cl}{CH}-$ | $-CH_2-CH=CH_2$ | H | $CH_3$ | 1,4869 |
| IV-4 | $Cl_2CH-$ | $-CH_3$ | H | $CH_3$ | 1,5015 |
| IV-5 | $Cl_2CH-$ | $CH_2-\overset{O}{\overset{\|\|}{C}}-CH_3$ | H | $CH_3$ | 111°C (Fp.) |
| IV-6 | $Cl_2CH-$ | $-CH_2-CH=CH_2$ | H | H | |
| IV-7 | $Cl_2CH-$ | $-CH_2-CH=CH_2$ | $CH_3$ | $CH_3$ | |

Die gute Wirksamkeit der erfindungsgemäßen Gegenmittel geht aus dem nachfolgenden Beispiel hervor.

In diesem Beispiel werden die nachstehend angegebenen Verbindungen als Vergleichskomponenten eingesetzt:

(A) = 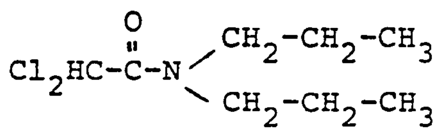

(N,N-Di-n-propyl-dichloracetamid)

Ferner wird in diesem Beispiel als herbizider Wirkstoff das nachstehend angegebene Acetanilid eingesetzt.

(B) = 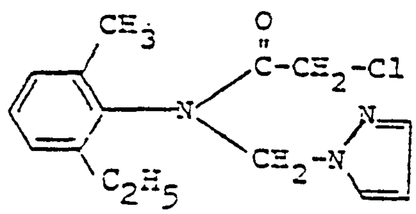

(2-Methyl-6-ethyl-N-(pyrazol-1-yl-methyl)-chloracetanilid).

Beispiel A

Pre-emergence-Test

Lösungsmittel: 5 Gew.-Teile Aceton
Emulgator: 1 Gew.-Teil Alkylarylpolyglykolether

Zur Herstellung einer zweckmäßigen Wirkstoffzubereitung vermischt man 1 Gew.-Teil herbiziden Wirkstoff bzw. Gegenmittel bzw. eines Gemisches aus Gegenmittel und herbizidem Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalem Boden ausgesät und nach 24 Stunden mit der Herbizid-Zubereitung bzw. mit der Gegenmittel-Zubereitung bzw. mit der Zubereitung aus Gegenmittel und herbizidem Wirkstoff begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle.
Es bedeuten:

0 % = keine Wirkung (wie unbehandelte Kontrolle)

100 % = totale Vernichtung

Eine Auswertung der Testergebnisse zeigt, daß die erfindungsgemäßen Verbindungen (1) und (4) besser zum Schutz von Kulturpflanzen vor Schäden durch das 2-Methyl-6-ethyl-N-(pyrazol-1-yl-methyl)-chlor-acetanilid geeignet ist als die Vergleichskomponente (A).

## Patentansprüche

1. Halogenalkylamide der Formel

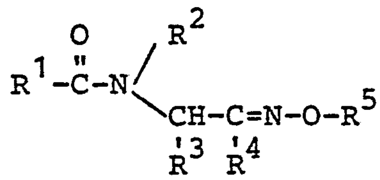

(I)

in welcher

$R^1$ für Halogenalkyl steht,

$R^2$ für Alkyl, Alkenyl, Alkinyl, Alkoxyalkyl, Alkylthioalkyl, Aralkyl, Halogenalkyl oder Alkoximinoalkyl steht,

$R^3$ für Wasserstoff oder Alkyl mit 1 bis 4 Kohlenstoffatomen steht,

$R^4$ für Wasserstoff oder Alkyl mit 1 bis 4 Kohlenstoffatomen steht und

$R^5$ für Wasserstoff, Alkyl, Alkenyl, Alkinyl oder Aralkyl steht.

2. Verfahren zur Herstellung von Halogenalkylamiden der Formel (I), dadurch gekennzeichnet, daß man

a) Säurechloride bzw. Säureanhydride der Formel

$$R^1-\overset{O}{\overset{\|}{C}}-X \qquad (II)$$

in welcher

$R^1$ die oben angegebene Bedeutung hat und

X für Chlor oder den Rest $R^1$-CO-O- steht, worin

$R^1$ wiederum die oben angegebene Bedeutung hat,

mit Amin-Derivaten der Formel

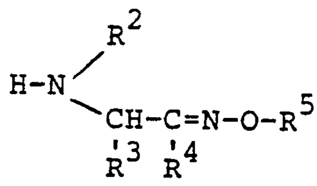 (III)

in welcher
$R^2$, $R^3$, $R^4$ und $R^5$ die oben angegebene Bedeutung haben,

gegebenenfalls in Gegenwart eines Säurebindemittels sowie gegebenenfalls in Gegenwart eines inerten Verdünnungsmittels umsetzt,

oder

b) Halogenacylamine der Formel

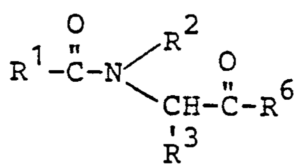 (IV)

in welcher
$R^1$, $R^2$ und $R^3$ die oben angegebene Bedeutung haben und
$R^6$ für Wasserstoff oder Methyl steht,

mit Hydroxylamin-Derivaten der Formel

$$H_2N-O-R^5 \quad x \quad HCl \qquad (V)$$

in welcher

$R^5$ die oben angegebene Bedeutung hat,

in Gegenwart eines Säurebindemittels sowie in Gegenwart eines Verdünnungsmittels umsetzt.

3. Mittel zum Schutz von Kulturpflanzen vor Schädigungen durch herbizid wirdsame Thiolcarbamate bzw. durch herbizid wirksame Acetanilide, gekennzeichnet durch einen Gehalt an mindestens einem Halogenalkylamid der Formel (I).

4. Verwendung von Halogenalkylamiden der Formel (I) zum Schutz von Kulturpflanzen vor Schädigungen durch herbizid wirksame Thiolcarbamate bzw. durch herbizid wirksame Acetanilide.

5. Mittel zur selektiven Unkrautbekämpfung in Nutzpflanzenkulturen, gekennzeichnet durch einen Gehalt an einer Wirkstoffkombination, bestehend aus mindestens einem Halogenalkylamid der Formel (I) und mindestens einem herbizid wirksamen Thiolcarbamat bzw. mindestens einem herbizid wirksamen Acetanilid.

6. Verwendung von Wirkstoffkombinationen gemäß Anspruch 5 zur selektiven Unkrautbekämpfung in Nutzpflanzenkulturen.

7. Amin-Derivate der Formel

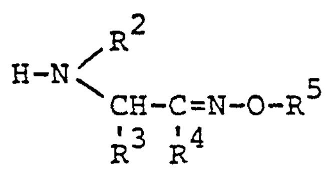

(III)

in welcher

$R^2$ für Alkyl, Alkenyl, Alkinyl, Alkoxyalkyl, Alkylthioalkyl, Aralkyl, Halogenalkyl oder Alkoximinoalkyl steht,

$R^3$ für Wasserstoff oder Alkyl mit 1 bis 4 Kohlenstoffatomen steht,

$R^4$ für Wasserstoff oder Alkyl mit 1 bis 4 Kohlenstoffatomen steht und

$R^5$ für Wasserstoff, Alkyl, Alkenyl, Alkinyl oder Aralkyl steht.

8. Verfahren zur Herstellung von Amin-Derivaten der Formel (III), dadurch gekennzeichnet, daß man Amine

der Formel

$$H_2N-R^2 \qquad (VI)$$

in welcher
$R^2$ die oben angegebene Bedeutung hat,

mit Verbindungen der Formel

$$Y-\underset{R^3}{CH}-\underset{R^4}{C}=N-O-R^5 \qquad (VII)$$

in welcher
$R^3$, $R^4$ und $R^5$ die oben angegebene Bedeutung haben und
Y für Halogen, Tosyl oder Mesyl steht,

gegebenenfalls in Gegenwart eines Säurebindemittels sowie gegebenenfalls in Gegenwart eines inerten Verdünnungsmittels umsetzt.

9. Halogenacylamine der Formel

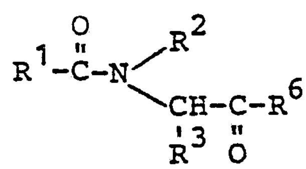

(IV)

in welcher
$R^1$ für Halogenalkyl steht,
$R^2$ für Alkyl, Alkenyl, Alkinyl, Alkoxyalkyl, Alkylthioalkyl, Aralkyl, Halogenalkyl oder Alkox -

iminoalkyl steht,

$R^3$ für Wasserstoff oder Alkyl mit 1 bis 4 Kohlenstoffatomen steht und

$R^6$ für Wasserstoff oder Methyl steht.

10. Verfahren zur Herstellung von Halogenacylaminen der Formel (IV), dadurch gekennzeichnet, daß man

c) zur Synthese derjenigen Halogenacylamine der Formel (IV), in denen $R^6$ für Methyl steht, Verbindungen der Formel

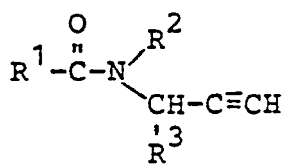

(XI)

in welcher
$R^1$, $R^2$ und $R^3$ die oben angegebene Bedeutung haben,

in saurem Medium in Gegenwart eines Katalysators mit Wasser behandelt,

bzw.

d) zur Synthese derjenigen Halogenacylamine der Formel (IV), in denen $R^6$ für Wasserstoff steht, Acetale der Formel

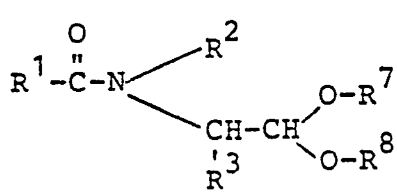

(XII)

in welcher
$R^1$, $R^2$ und $R^3$ die oben angegebene Bedeutung haben,
$R^7$ für Alkyl steht,
$R^8$ für Alkyl steht und ferner
$R^7$ und $R^8$ gemeinsam für eine Ethylengruppe stehen,

in Gegenwart eines sauren Katalysators sowie in Gegenwart eines Verdünnungsmittels spaltet.